# EUROPEAN PATENT APPLICATION

(11) **EP 4 497 805 A1**
(43) Date of publication of application: **29.01.2025**
(21) Application number: 24190212.1
(22) Date of filing: 23.07.2024
(51) Int. Cl.: C10L 3/10, B01D 53/04, H01M 8/0662

(54) **MIXED MEDIA DESULFURIZATION SYSTEMS AND FUEL CELL SYSTEMS INCLUDING THE SAME**

(30) Priority: 24.07.2023 US 202318357802; 28.06.2024 US 202418759423
(71) Applicant: Bloom Energy Corporation, San Jose, CA 95134 (US)
(72) Inventor: RANGANATHAN, Srikanth, San Jose, California, 95134 (US); GOEL, Sarika, San Jose, 95134 (US)
(74) Representative: Wichmann, Hendrik

(57) **Abstract**

A desulfurization system includes at least one reaction vessel containing an inlet and an outlet, at least one material located in the at least one reaction vessel and configured to hydrolyze and sequester at least one sulfur species in a fuel provided to the inlet.

## Description

### FIELD

Various embodiments relate to systems for the desulfurization of fuel streams provided to fuel cell systems, and in particular, to mixed media desulfurization systems.

### BACKGROUND

Fuel cells, such as solid oxide fuel cells (SOFC's), are electrochemical devices which can convert energy stored in fuels to electrical energy with high efficiencies. High temperature fuel cells include solid oxide and molten carbonate fuel cells. These fuel cells may operate using hydrogen and/or hydrocarbon fuels. There are classes of fuel cells, such as the solid oxide regenerative fuel cells, that also allow reversed operation, such that oxidized fuel can be reduced back to unoxidized fuel using electrical energy as an input.

The reliability of fuel cell systems, such as SOFC systems, is impacted by the presence and concentration of contaminants in the fuel stream. Contaminants, such as sulfur and sulfur compounds, may degrade the fuel cell stack's performance and cause irreversible damage resulting in decreased efficiencies and costly replacement. Accordingly, when using a hydrocarbon fuel, there is a need for fuel cell systems to utilize a desulfurization system to remove sulfur from the hydrocarbon fuel.

### SUMMARY

According to various embodiments of the present disclosure, a desulfurization system includes at least one reaction vessel comprising an inlet and an outlet, and at least one material located in the at least one reaction vessel and configured to hydrolyze and sequester at least one sulfur species in a fuel provided to the inlet.

According to various embodiments of the present disclosure, a method of desulfurizing fuel comprises providing a fuel to least one reaction vessel comprising at least one material to hydrolyze and sequester at least one sulfur species in the fuel, and outputting a desulfurized fuel from the at least one reaction vessel.

### BRIEF DESCRIPTION OF THE DRAWINGS

The accompanying drawings, which are incorporated herein and constitute part of this specification, illustrate example embodiments of the invention, and together with the general description given above and the detailed description given below, serve to explain the features of the invention.
FIG. 1 is a schematic representation of a SOFC system, according to various embodiments of the present disclosure.
FIG. 2A is a schematic view of the desulfurization system of FIG. 1, according to first and second embodiments of the present disclosure.
FIG. 2B is cross-sectional view of a reaction vessel of that may be included in the desulfurization system of FIG. 2A, according to the first embodiment of the present disclosure.
FIG. 3 is a cross-sectional view of a dual reaction vessel assembly that may be used in the desulfurization system of FIG 2A according to the second embodiment of the present disclosure.
FIG. 4 is cross-sectional view of an alternative reaction vessel of that may be included in the desulfurization system of FIG. 2A, according to various embodiments of the present disclosure.

### DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes and are not intended to limit the scope of the invention or the claims.

Ranges can be expressed herein as from "about" one particular value, and/or to "about" another particular value. When such a range is expressed, examples include from the one particular value and/or to and including the other particular value. In some embodiments, a value of "about X" may include values of +/- 1% X. It will be further understood that the endpoints of each of the ranges are significant both in relation to the other endpoint, and independently of the other endpoint.

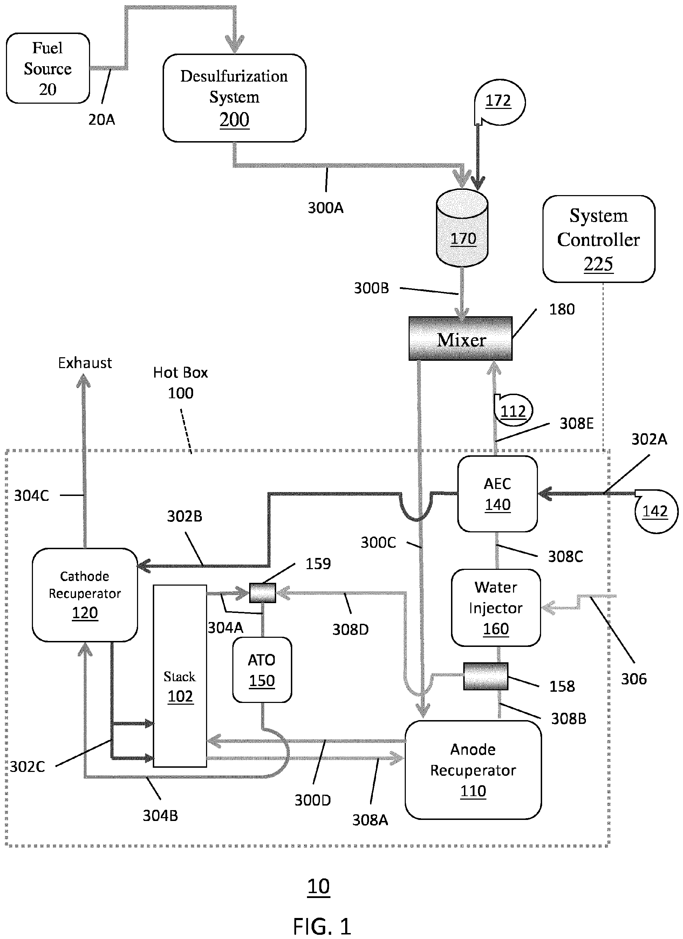

FIG. 1 is a schematic representation of a SOFC system 10, according to various embodiments of the present disclosure. Referring to FIG. 1, the system 10 includes a hotbox 100 and various components disposed therein or adjacent thereto. The hotbox 100 may contain one or more fuel cell stacks 102, which may include solid oxide fuel cells separated by interconnects.

The hotbox 100 may also contain an anode recuperator heat exchanger 110, a cathode recuperator heat exchanger 120, an anode tail gas oxidizer (ATO) 150, an anode exhaust cooler heat exchanger (AEC) 140, a splitter 158, a vortex generator 159, and a water injector 160. The system 10 may also include a catalytic partial oxidation (CPOx) reactor 170, a mixer 180, a CPOx blower 172 (e.g., air blower), a main air blower 142 (e.g., system blower), and an anode recycle blower 112, which may be disposed outside of the hotbox 100. However, the present disclosure is not limited to any particular location for each of the components with respect to the hotbox 100.

A hydrocarbon fuel may be provided to the CPOx reactor 170 by fuel conduit 300A. The CPOx blower 172 may provide air to the CPOx reactor 170 during system start-up. The fuel and/or air may then be provided to the mixer 180 by fuel conduit 300B. Fuel (e.g., the fuel inlet stream) flows from the mixer 180 to the anode recuperator 110 through fuel conduit 300C. The fuel is heated in the anode recuperator 110 by a portion of the fuel exhaust and the fuel then flows from the anode recuperator 110 to the stack 102 through fuel conduit 300D.

The main air blower 142 may be configured to provide an air stream (e.g., air inlet stream) to the anode exhaust cooler 140 through air conduit 302A. Air flows from the anode exhaust cooler 140 to the cathode recuperator 120 through air conduit 302B. The air is heated by the ATO exhaust in the cathode recuperator 120. The air flows from the cathode recuperator 120 to the stack 102 through air conduit 302C.

An anode exhaust stream (e.g., the fuel exhaust stream) generated in the stack 102 is provided to the anode recuperator 110 through anode exhaust conduit 308A. The anode exhaust may contain unreacted fuel and may also be referred to herein as fuel exhaust. The anode exhaust may be provided from the anode recuperator 110 to the splitter 158 by anode exhaust conduit 308B. A first portion of the anode exhaust may be provided from the splitter 158 to the anode exhaust cooler 140 through the water injector 160 and the anode exhaust conduit 308C. A second portion of the anode exhaust can be provided from the splitter 158 to the ATO 150 through the anode exhaust conduit 308D. The first portion of the anode exhaust heats the air inlet stream in the anode exhaust cooler 140 and may then be provided from the anode exhaust cooler 140 to the mixer 180 through the anode exhaust conduit 308E. The anode recycle blower 112 may be configured to move anode exhaust though anode exhaust conduit 308E, as discussed below.

Cathode exhaust generated in the stack 102 flows to the ATO 150 through exhaust conduit 304A. The vortex generator 159 may be disposed in exhaust conduit 304A and may be configured to swirl the cathode exhaust. The anode exhaust conduit 308D may be fluidly connected to the vortex generator 159 or to the cathode exhaust conduit 304A or the ATO 150 downstream of the vortex generator 159. The swirled cathode exhaust may mix with the second portion of the anode exhaust provided by the splitter 158 before being provided to the ATO 150. The mixture may be oxidized in the ATO 150 to generate an ATO exhaust. The ATO exhaust flows from the ATO 150 to the cathode recuperator 120 through exhaust conduit 304B. Exhaust flows from the cathode recuperator and out of the hotbox 100 through exhaust conduit 304C.

Water flows from a water source, such as a water tank or a water pipe, to the water injector 160 through water conduit 306. The water injector 160 injects water directly into a first portion of the anode exhaust provided in anode exhaust conduit 308C. Heat from the first portion of the anode exhaust (also referred to as a recycled anode exhaust stream) provided in anode exhaust conduit 308C vaporizes the water to generate steam. The steam mixes with the anode exhaust, and the resultant mixture is provided to the anode exhaust cooler 140. The mixture is then provided from the anode exhaust cooler 140 to the mixer 180 through the anode exhaust conduit 308E. The mixer 180 is configured to mix the steam and the first portion of the anode exhaust with fresh fuel (i.e., the fuel inlet stream). This humidified fuel mixture may then be heated in the anode recuperator 110 by the anode exhaust, before being provided to the stack 102. The system 10 may also include one or more fuel reforming catalysts located inside and/or downstream of the anode recuperator 110. The reforming catalyst(s) reform the humidified fuel mixture before it is provided to the stack 102.

The system 10 may further a system controller 225 configured to control various elements of the system 10. The controller 225 may include a central processing unit configured to execute stored instructions. For example, the controller 225 may be configured to control fuel and/or air flow through the system 10, according to fuel composition data.

The system 10 may include or be fluidly connected to a desulfurization system 200 (also referred to as desulfurization reactor 200). The desulfurization system 200 may receive a hydrocarbon fuel, such as natural gas, methane, propane, butane, biogas, etc., from a fuel source 20, such as a fuel tank, a fuel line, or a biogas generation site, via fuel source conduit 20A.

The system 200 may be configured to remove sulfur species (e.g., sulfur and/or sulfur compounds) from the fuel in order to provide desulfurized fuel to the system 10 (e.g., to the CPOx reactor 170) via the fuel conduit 300A. In some embodiments, the desulfurization system 200 may be configured to provide desulfurized fuel to multiple fuel cell systems 10.

In some embodiments, the fuel source 20 may be a biogas site including a fuel compressor. Compression of the biogas may increase the temperature of the fuel provided to the desulfurization system 200, which may increase sulfur removal rates.

Biogas is a renewable hydrocarbon fuel that can be produced from the anaerobic breakdown of organic raw materials, such as agricultural waste, manure, municipal waste, plant material, sewage, green waste, or food waste. Biogas may include a mixture of different gases. For example, biogas may include 50 to 80 volume % methane (CH₄), 20 to 50 volume % carbon dioxide (CO₂), and relatively small amounts (e.g., less than 5 volume %) of other components, such as sulfur species, moisture (e.g., water vapor), nitrogen, hydrogen, oxygen, carbon monoxide, siloxanes, ammonia, etc.

### Desulfurization Systems

Sulfur species are known to damage and deactivate fuel cell catalysts (e.g., anode electrode catalysts). Sulfur species include elemental sulfur and its compounds, such as non-metal sulfides, including hydrogen sulfide (H₂S), carbonyl sulfide (COS) and carbon disulfide CS₂, and organic sulfur (i.e., organosulfur) compounds, such as mercaptans, thiophenes, sulfides, and disulfides. Biogas may contain relatively high amounts of carbon-sulfur compounds, such as COS and CS₂, which may be particularly difficult to remove from gas streams using sulfur species sorption media (generally designed for H₂S removal primarily). Desulfurization technology may also require high operating temperatures (e.g., 200 °C or more, such as 300 °C or more) and/or high pressures to remove such carbon-sulfur compounds, and thus, may reduce system efficiency.

Accordingly, embodiments of the present disclosure include a mixed media desulfurization system comprising both a hydrolysis catalyst and a sulfur species sorbent. The hydrolysis catalyst converts COS and/or CS₂ to H₂S and CO₂ using residual moisture (e.g., water vapor) in the fuel stream, and the generated H₂S is then sequestered (i.e., captured by being adsorbed and/or absorbed) by the sulfur species sorbent. As used herein, a sulfur species sorbent includes adsorption and/or absorption materials which adsorb and/or absorb the sulfur species. An example of the sulfur species sorbent includes a sulfur species adsorption bed.

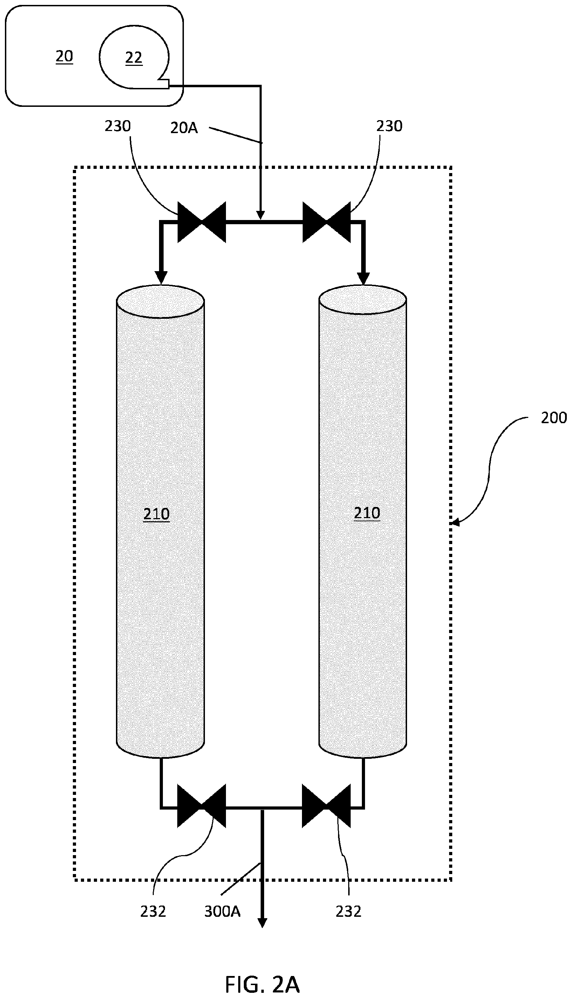

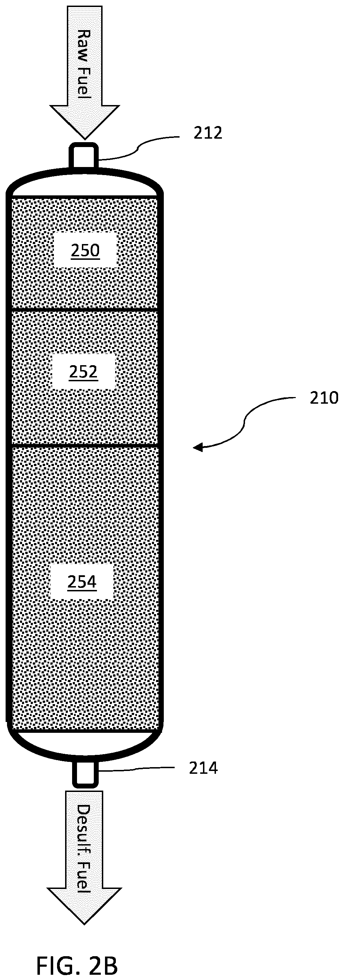

FIG. 2A is a schematic view of the desulfurization system 200 of FIG. 1, according to various embodiments of the present disclosure, and FIG. 2B is cross-sectional view of a reaction (e.g., desulfurization) vessel 210 that may be included in the desulfurization system 200 of FIG. 2A. Referring to FIGS. 2A and 2B, the system 200 may include at least one reaction vessel 210 containing a desulfurization catalyst and/or sorbent configured to desulfurize a relatively low temperature fuel stream, such as a fuel stream having a temperature of 200°C or less, such as a temperature of 25 °C to 75 °C, for example a temperature of 50 °C to 65 °C.

As shown in FIG. 2A, the system 200 may include at least two reaction vessels 210, inlet valves 230, and outlet valves 232. The system 200 may be configured to receive the raw fuel (i.e., the raw, sulfur species containing fuel inlet stream) from the fuel source 20 via the fuel source conduit 20A and may output the desulfurized fuel (i.e., the desulfurized fuel inlet stream) to the fuel conduit 300A. In some embodiments, the system 200 may be configured to receive raw fuel from a compressor 22 of the fuel source 20. For example, the fuel source 20 may be a biogas generation site, and the compressor 22 can be an on-site biogas compressor. As such, the system 200 may be configured to operate using raw fuel heated (e.g., to a temperature of 50 °C to 65 °C) only by compression at a fuel source 20 site. Alternatively, the fuel source 20 may be a hydrocarbon fuel storage vessel or line, such as a biogas or natural gas storage vessel or line.

The inlet valves 230 and the outlet valves 232 may be configured to selectively control the raw fuel flow to the vessels 210. For example, the raw fuel may be selectively provided to one of the vessels 210, while no raw fuel is provided to the other vessel 210 to allow for servicing and/or replacement of the mixed media in the other vessel 210.

As shown in FIG. 2B, each vessel 210 may be a tube or conduit having an inlet 212 configured to receive the raw fuel and an outlet 214 configured to output the desulfurized fuel. The vessel 210 may be formed of a metal or a metal alloy, such as carbon steel, stainless steel or the like. The outer walls of the vessel 210 may be optionally covered by thermal insulation (not shown). The vessel 210 may include different types of sulfur catalysts and/or sorbents, which may be serially arranged in beds configured to sequentially receive the raw fuel provided to the vessel 210. For example, the vessel 210 may include a hydrolysis catalyst bed 250, a first sorption bed 252, and a second sorption bed 254. The first sorption bed 252 and the second sorption bed 254 may comprise sulfur species adsorption beds containing different sulfur species adsorption materials.

The first sorption bed 252 may be disposed downstream of the hydrolysis bed 250, and the second sorption bed 254 may be disposed downstream of the first sorption bed 252, with respect to a fuel flow direction through the vessel 210. Thus, the first sorption bed 252 is located between the hydrolysis bed 250 and the second sorption bed 254.

The hydrolysis bed 250 may be configured to receive the raw fuel from the inlet 212. The hydrolysis bed 250 may include a sulfur hydrolysis catalyst configured to hydrolyze carbon-sulfur species, such as COS and/or CS₂, to produce hydrogen sulfide and carbon dioxide, using water present in the raw fuel. Alternatively, if the raw fuel lacks sufficient water for the hydrolysis reaction, then water may be added to the fuel source 20 or the fuel source conduit 20A upstream of the inlet 212.

The hydrolysis catalyst may be an ambient hydrolysis catalyst having an operating temperature ranging from about 10 °C to about 200 °C, such as a temperature ranging from about 20°C to about 150 °C, or from about 22 °C to about 65 °C. The hydrolysis catalyst may be configured to hydrolyze sulfur species in fuels, such as raw biogas fuel, having a moisture content of up to 5000 ppm, such as from about 100 ppm to about 4500 ppm, including from about 200 ppm to about 3000 ppm. For example, the sulfur hydrolysis catalyst may hydrolyze COS using residual water vapor in the raw fuel to form H₂S and carbon dioxide using the hydrolysis reaction (i.e., COS + H₂O -> CO₂ + H₂S) at a temperature below 100 °C, such as from about 22 °C to about 65 °C.

In some embodiments, the hydrolysis bed 250 may include any suitable hydrolysis catalyst, such as metal oxide catalysts, mixed metal oxide catalysts, metal-metal oxide catalysts, bimetallic metal oxide catalysts, combinations thereof, or the like, which may be supported or unsupported and may be promoted or unpromoted. For example, suitable hydrolysis catalysts may include alumina (Al₂O₃), titania (TiO₂), zirconia (ZrO₂), ceria (CeO₂), silica (SiO₂), aluminosilicates, Co-Mo/Al₂O₃, Ni-Mo/Al₂O₃, other refractory metal oxide material catalysts, or combinations thereof. For example, adding TiO₂ to activated Al₂O₃ may provide a lower operating temperature than activated Al₂O₃ alone. The hydrolysis catalyst may be in the form of spheres or extruded pellets, which may be pressed together or contained in a porous bag or container. Suitable metal promotors may include Co, Cr, Fe, Ni, Mo, or the like.

The first sorption bed 252 may include a first desulfurization material configured to sequester (e.g., adsorb and/or absorb) organic sulfur compounds, such as mercaptans, thiophenes, sulfides, disulfides, and/or other trace contaminant species from fuel output from the hydrolysis bed 250. The first desulfurization material may be an ambient temperature sorption material. For example, the first desulfurization material may have an operating temperature ranging from about 15 °C to about 80 °C, such as from about 20 °C to about 70 °C, or from about 22 °C to about 66 °C. The first desulfurization material may be configured to sorb sulfur species, such as organosulfur species, from fuels having a moisture content of up to about 5000 ppm, such as from about 100 ppm to about 4500 ppm, including from about 200 ppm to about 4000 ppm.

The first sorption bed 252 may include one or more metal oxide desulfurization materials and optionally one or more metal promotors disposed on a sorbent support. For example, the first sorption bed 252 may include CuO, Fe₂O₃, MnO₂, and ZnO desulfurization materials disposed on a support, such as an activated carbon sorbent support. In one embodiment, the material and/or a promoter may also be embedded in the support material.

The second sorption bed 254 may include a second desulfurization material different from the first desulfurization material. The second desulfurization material is configured to sequester non-metal sulfur compounds, such as H₂S, CS₂, and/or COS, from fuel received from the first sorption bed 252. The second desulfurization material may be an ambient temperature sorption material. For example, the second desulfurization material may have an operating temperature ranging from about 15 °C to about 90 °C, such as from about 20 °C to about 85 °C, or from about 22 °C to about 80 °C. The second desulfurization material may be configured to sorb sulfur species from fuels having a moisture content of up to about 5000 ppm, such as from about 100 ppm to about 4500 ppm, including from about 200 ppm to about 4000 ppm.

For example, the second sorption bed 254 may include a copper oxide (e.g., CuO) and manganese oxide (e.g., MnO₂) based desulfurization materials having a high sorption capacity for both hydrogen sulfide, COS and organosulfur compounds, such as mercaptans, thiophenes, etc. The oxide materials may be disposed on a support, such as an activated carbon, zinc oxide or AlOₓ support. The second desulfurization material may be in the form of spheres or extruded pellets, which may be pressed together or contained in a porous bag or container. In one embodiment, the sorption material and/or a promoter may also be embedded in the support structure.

However, the present disclosure is not limited to the above catalysts and/or sorbents. In various embodiments, a number of different materials may be used for sequestering sulfur compounds. For example, activated carbon has a high capacity for ethyl mercaptans, manganese oxide is effective for dimethyl sulfoxide removal, and zinc oxide can be used to remove hydrogen sulfide. Other materials that may be used in desulfurization processes include copper/zinc oxides, nickel-based sorbents, nickel oxides, zeolites, and molecular sieves, among others. Nickel sorbents may be used sorbing many of the sulfur compounds from a fuel, while copper-containing sorbents may be used to sorb H₂S.

The relative volumes of the beds 250, 252, 254 may be the same or different. In some embodiments, the relative volumes of the beds 250, 252, 254 may be set according to the amounts and/or types of contaminants in a fuel to be processed. For example, the hydrolysis bed 250 may occupy from about 5% to about 20%, such as about 10 % of the total volume of the vessel 210 utilized for sulfur treatment, the first sorption bed 252 may occupy from about 0 to 40%, such as from about 1% to about 40%, about 20% to about 40%, or about 30 % of the total volume of the vessel 210 utilized for sulfur treatment, and the second sorption bed 254 may occupy from about 40% to about 94%, such as from about 50% to about 70%, or about 60 % of the total volume of the vessel 210 utilized for sulfur treatment.

In an alternative embodiment, the hydrolysis bed 250 may be located downstream of the first sorption bed 252. For example, the hydrolysis bed 250 may be located between the first sorption bed 252 and the second sorption bed 254. In this alternative embodiment, the first sorption bed 252 may remove at least a portion of the H₂S from the fuel before the fuel reaches the hydrolysis bed 250. This alternative bed configuration prevents or reduces H₂S interference with the hydrolysis reaction in the hydrolysis bed 250. The second sorption bed 254 is then used to remove one or more sulfur species from the fuel exiting the hydrolysis bed.

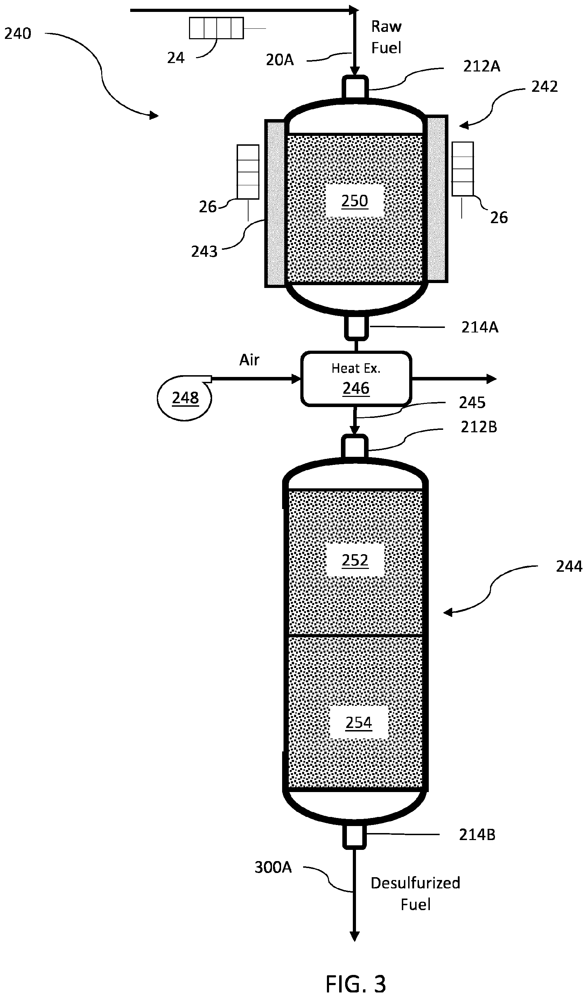

FIG. 3 is a cross-sectional view of a dual reaction vessel assembly 240 that may be used in place of the single vessel 210 of FIG 2A. Referring to FIG. 3, the assembly 240 may include a first vessel 242, a second vessel 244, a cooling device 246, such as a heat exchanger or fan, and an optional blower 248. The vessels 242, 244 may be similar to the reaction vessel 210. As such, only the differences there between will be discussed in detail.

The first vessel 242 and the second vessel 244 are arranged in series along the fuel flow direction. The first vessel 242 may include the sulfur hydrolysis bed 250 and may be fluidly connected at its inlet 212A to the fuel source conduit 20A and at its outlet 214A to the second vessel 244. The first vessel 242 may optionally include thermal insulation 243. The second vessel 244 may include the first sorption bed 252 and the second sorption bed 254 arranged in series along the fuel flow direction. The cooling device 246, such as a heat exchanger or fan, may be disposed on a fuel conduit 245 that fluidly connects the outlet 214A of the first vessel 242 to the inlet 212B of the second vessel 244. Thus, the cooling device 246 is located between the outlet 214A of the first vessel 242 and the inlet 212B of the second vessel 244. The desulfurized fuel is provided into the fuel conduit 300A from the outlet 214B of the second vessel 244.

In operation, fuel located in the first vessel 242 may be maintained at an elevated temperature, such as a temperature of at least 150 °C, such as from 150 °C to 400 °C, from 150 °C to 300 °C, from 150 °C to 250 °C, or from 150 °C to 200 °C. For example, fuel may be preheated by a preheating system (e.g., a heater 24 located on the fuel source conduit 20A) and/or by compression in a compressor 22 before being provided to the first vessel 242. Alternatively or additionally, the first vessel 242 may include a heating element 26 which heats the fuel in the first vessel 242. The higher temperature may increase the reaction rate of sulfur species hydrolysis in the hydrolysis bed 250 and may hydrolyze CS₂ to H₂S and CO₂ using the hydrolysis reaction. The higher temperature may also offset interference effects of other species (e.g., H₂S and/or CO₂) and/or may increase adsorption capacity. The hydrolysis reaction of CS₂ may be a two-step reaction (i.e., a first step reaction of CS₂ + H₂O -> COS + H₂S followed by a second step reaction of COS + H₂O -> CO₂ + H₂S) or a one-step reaction (i.e., CS₂ + 2H₂O -> CO₂ + 2H₂S).

The cooling device 246 cools fuel output from the first vessel 242 before being supplied to the second vessel 244. The cooling device 246 may be a cooling fan or any suitable heat exchanger, such as an air cooler heat exchanger which transfers heat from the fuel in the fuel conduit 245 to air provided into the heat exchanger by the air blower 248. In another embodiment, the cooling device 246 may be a heat exchanger which transfers heat from the fuel in the fuel conduit 245 to the cooler raw fuel in fuel source conduit 20A upstream of the preheating system 24. Thus, the portion of the fuel source conduit 20A located upstream of the preheating system 24 may pass through the cooling device 246 before passing through or adjacent to the preheating system 24. In some embodiments, the cooling device 246 may cool the fuel to a temperature below 70 °C, such as a temperature ranging from about 50 °C to about 65 °C, such as about 60 °C, before the fuel is provided to the first sorption bed 252. Therefore, the cooling device 246 may prevent damage to the beds 252, 254 due to high temperature fuel exposure. Fuel output from the first sorption bed 252 may be provided to the second sorption bed 254, and desulfurized fuel output from the second sorption bed 254 may be provided to the outlet 214B of the second vessel 244.

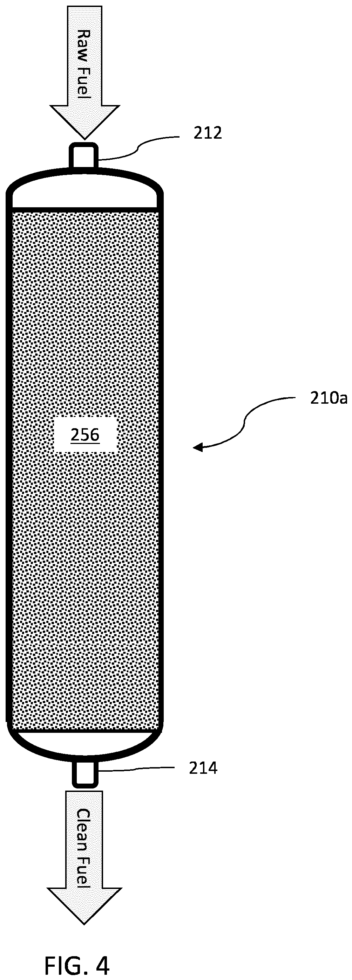

FIG. 4 is cross-sectional view of an alternative reaction (e.g., desulfurization) vessel 210a that may be included in the desulfurization system 200 of FIG. 2A. The reaction vessel 210a may be similar to the reaction vessel 210. As such, only the differences therebetween will be discussed in detail.

Referring to FIG. 4, the reaction vessel 210a may include a dual action bed 256 comprising both at least one hydrolysis catalyst and at least one desulfurization material (i.e., sulfur species sorbent) as described above, which may be mixed together and/or disposed on a support. For example, the dual action bed 256 may comprise CuCO₃/CuO, CuO/MnO₂, CuO/ZnO, CuCO₃/ZnCO₃, ZnO/Al₂O₃ catalyst/sorbents, combinations thereof, or the like. In one embodiment, the catalyst and/or a promoter may also be embedded in the support material.

In one embodiment, the hydrolysis catalysts and the sorbent materials may be evenly dispersed in the dual action bed 256. In another embodiment, the hydrolysis catalysts and the sorbent materials may be present in the dual action bed 256 at a concentration gradient. For example, the dual action bed 256 may comprise a relatively high concentration of the hydrolysis catalysts and a relatively low concentration of the sorbent material adjacent the inlet 212 and may comprise a relatively low concentration of the hydrolysis catalysts and a relatively high concentration of the sorbent material adjacent the outlet 214.

Accordingly, various embodiments provide mixed media desulfurization systems that are configured to desulfurize various raw fuels that contain significant amounts of sulfur species and optionally water and output a desulfurized fuel having a sulfur content of 5 ppb or less by volume. In particular, the systems may include a hydrolysis catalyst bed configured to hydrolyze carbon-sulfur compounds, such as COS and CS₂, to generate hydrogen sulfide, and one or more sorption beds configured to sorb hydrogen sulfide and/or any other remaining sulfur species.

In one embodiment, a method of desulfurizing a fuel includes providing a fuel to the reaction vessel of the desulfurization system 200 as described above. The fuel may be a raw biogas fuel having a water content ranging from about 100 ppm to about 4500 ppm, and a sulfur species content ranging from about 1000 ppm to about 12,000 ppm. The fuel may be provided to the system at a temperature of at least about room temperature (e.g., about 22 °C), such as a temperature of 25 °C to 200 °C, including a temperature of 25 °C to 75 °C, for example a temperature of 50 °C to 65 °C. For example, the fuel may be provided directly from a compressor at a biogas generation site.

The fuel may flow through a hydrolysis bed, a first sorption bed, and a second sorption bed of at least one reaction vessel. Carbon-sulfur species, such as COS and CS₂ may be hydrolyzed in the hydrolysis bed to form hydrogen sulfide, the remaining organic sulfur species may be sorbed (i.e., captured by adsorption and/or absorption) in the first bed, and most of the remaining COS, CS₂ and H₂S are sorbed in the second sorption bed. Desulfurized fuel may be output from the reaction vessel. For example, the desulfurized fuel may be provided to a fuel cell system to generate electric power.

Fuel cell systems of various embodiments of the present disclosure may provide a benefit to the environment, by efficiently generating electricity using desulfurized biogas.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the principles and novel features disclosed herein.
**The** invention also refers to the following embodiments, wherein the term "claim" means "embodiment:
1. A fuel desulfurization system, comprising:
   at least one reaction vessel comprising an inlet and an outlet; and
   at least one material located in the at least one reaction vessel and configured to hydrolyze and sequester at least one sulfur species in a fuel provided to the inlet.
2. The fuel desulfurization system of claim 1, wherein the at least one material comprises:
   a hydrolysis catalyst configured to hydrolyze at least one of carbonyl sulfide or carbon disulfide to generate hydrogen sulfide and carbon dioxide; and
   a sulfur species sorbent configured to sequester at least the hydrogen sulfide.
3. The fuel desulfurization system of claim 2, wherein:
   the hydrolysis catalyst is arranged as a hydrolysis bed located in the at least one reaction vessel; and
   the sulfur species sorbent is arranged as at least one sorption bed located in the at least one reaction vessel, downstream from the hydrolysis bed.
4. The fuel desulfurization system of claim 3, wherein:
   the sulfur species sorbent comprises a first sulfur species sorbent and a second sulfur species sorbent different from the first sulfur species sorbent; and
   the at least one sorption bed comprises a first sorption bed comprising the first sulfur species sorbent and a second sorption bed comprising the second sulfur species sorbent.
5. The fuel desulfurization system of claim 4, wherein:
   the first sorption bed is configured to sequester organosulfur species in the fuel output from the hydrolysis bed;
   the second sorption bed is configured to sequester the hydrogen sulfide in the fuel output from the first sorption bed;
   the hydrolysis catalyst comprises alumina;
   the first sulfur species sorbent comprises CuO, Fe₂O₃, MnO₂, ZnO or a combination thereof, located on a carbon support; and
   the second sulfur species sorbent comprises CuO, MnOz, or a combination thereof.
6. The fuel desulfurization system of claim 4, wherein:
   the hydrolysis bed occupies from about 5% to about 20% of a total volume of the reaction vessel utilized for sulfur treatment;
   the first sorption bed occupies from about 1% to about 40% of the total volume of the reaction vessel utilized for sulfur treatment; and
   the second sorption bed occupies from about 40% to about 94% of the total volume of the reaction vessel utilize for sulfur treatment.
7. The fuel desulfurization system of claim 4, wherein:
   the first sorption bed is located between the hydrolysis bed and the second sorption bed; or
   the hydrolysis bed is located between the first sorption bed and the second sorption bed.
8. The fuel desulfurization system of claim 4, wherein:
   the at least one reaction vessel comprises a first reaction vessel having the inlet and a second reaction vessel having the outlet;
   an intermediate fuel conduit connects an intermediate outlet of the first reaction vessel to an intermediate inlet of the second reaction vessel;
   the hydrolysis bed is located in the first reaction vessel; and
   the first sorption bed and the second sorption bed are located in the second reaction vessel.
9. The fuel desulfurization system of claim 8, further comprising:
   a fuel source conduit fluidly connecting the inlet of the first reaction vessel to a fuel source;
   a heating device located on or adjacent to at least one of the first reaction vessel or the fuel source conduit; and
   a cooling device located on or adjacent to the intermediate fuel conduit.
10. The fuel desulfurization system of claim 2, wherein the hydrolysis catalyst and the sulfur species sorbent are arranged as a dual action bed located in the at least one reaction vessel.
11. The fuel desulfurization system of claim 1, wherein:
   the outlet is fluidly connected to a fuel cell system;
   the inlet is fluidly connected to a biogas fuel source; and
   the hydrolysis catalyst is configured to hydrolyze the sulfur species in the biogas fuel received from the inlet using water in the biogas fuel.
12. A method comprising:
   providing a fuel to least one reaction vessel comprising at least one material to hydrolyze and sequester at least one sulfur species in the fuel; and
   outputting a desulfurized fuel from the at least one reaction vessel.
13. The method of claim 12, wherein the at least one material comprises:
   a hydrolysis catalyst configured to hydrolyze at least one of carbonyl sulfide or carbon disulfide to generate hydrogen sulfide and carbon dioxide; and
   a sulfur species sorbent configured to sequester the at least one sulfur species inside the reaction vessel.
14. The method of claim 13, wherein the sulfur species sorbent comprises:
   a first sulfur species sorbent configured to sequester organosulfur species in the fuel; and
   a second sulfur species sorbent configured to sequester the hydrogen sulfide in the fuel.
15. The method of claim 14, wherein:
   the hydrolysis catalyst comprises Al₂O₃, TiO₂, ZrO₂, CeO₂, SiO₂, or any combination thereof;
   the first sulfur species sorbent comprises CuO, Fe₂O₃, MnO₂, ZnO, or any combination thereof, located on a carbon support; and
   the second sulfur species sorbent comprises CuO, MnOz, or any combination thereof.
16. The method of claim 14, further comprising:
   pressurizing the fuel to increase a temperature of the fuel to 50 °C to 65 °C; and
   providing the pressurized fuel to the hydrolysis catalyst to hydrolyze the carbonyl sulfide at the temperature of 50 °C to 65 °C and generate the hydrogen sulfide and the carbon dioxide.
17. The method of claim 14, further comprising:
   heating the fuel to increase a temperature of the fuel to 150 °C to 400 °C;
   providing the heated fuel to the hydrolysis catalyst to hydrolyze the carbon disulfide at the temperature of 150 °C to 400 °C and generate the hydrogen sulfide and the carbon dioxide;
   cooling the fuel output from the hydrolysis catalyst to a temperature below 70 °C; and
   providing the cooled fuel to the first sulfur species sorbent.
18. The method of claim 17, wherein:
   the hydrolysis catalyst is located in a first reaction vessel;
   the first sulfur species sorbent and the second sulfur species sorbent are located in a second reaction vessel; and
   the fuel is cooled to the temperature below 70 °C between the first and the second reaction vessels.
19. The method claim 13, wherein the hydrolysis catalyst and the sulfur species sorbent are arranged as a dual action bed located in the at least one reaction vessel.
20. The method claim 12, wherein outputting the desulfurized fuel comprises outputting the desulfurized fuel to a fuel cell system, and wherein the fuel comprises a biogas fuel.

## Claims

1. A fuel desulfurization system, comprising:
at least one reaction vessel comprising an inlet and an outlet; and
at least one material located in the at least one reaction vessel and configured to hydrolyze and sequester at least one sulfur species in a fuel provided to the inlet.

2. The fuel desulfurization system of claim 1, wherein the at least one material comprises:
a hydrolysis catalyst configured to hydrolyze at least one of carbonyl sulfide or carbon disulfide to generate hydrogen sulfide and carbon dioxide; and
a sulfur species sorbent configured to sequester at least the hydrogen sulfide.

3. The fuel desulfurization system of claim 2, wherein:
the hydrolysis catalyst is arranged as a hydrolysis bed located in the at least one reaction vessel;
the sulfur species sorbent is arranged as at least one sorption bed located in the at least one reaction vessel, downstream from the hydrolysis bed;
the sulfur species sorbent comprises a first sulfur species sorbent and a second sulfur species sorbent different from the first sulfur species sorbent; and
the at least one sorption bed comprises a first sorption bed comprising the first sulfur species sorbent and a second sorption bed comprising the second sulfur species sorbent.

4. The fuel desulfurization system of claim 3, wherein:
the first sorption bed is configured to sequester organosulfur species in the fuel output from the hydrolysis bed;
the second sorption bed is configured to sequester the hydrogen sulfide in the fuel output from the first sorption bed;
the hydrolysis catalyst comprises alumina;
the first sulfur species sorbent comprises CuO, Fe₂O₃, MnO₂, ZnO or a combination thereof, located on a carbon support;
the second sulfur species sorbent comprises CuO, MnO₂, or a combination thereof;
the hydrolysis bed occupies from about 5% to about 20% of a total volume of the reaction vessel utilized for sulfur treatment;
the first sorption bed occupies from about 1% to about 40% of the total volume of the reaction vessel utilized for sulfur treatment; and
the second sorption bed occupies from about 40% to about 94% of the total volume of the reaction vessel utilize for sulfur treatment.

5. The fuel desulfurization system of claim 3, wherein:
the first sorption bed is located between the hydrolysis bed and the second sorption bed; or
the hydrolysis bed is located between the first sorption bed and the second sorption bed.

6. The fuel desulfurization system of claim 3, wherein:
the at least one reaction vessel comprises a first reaction vessel having the inlet and a second reaction vessel having the outlet;
an intermediate fuel conduit connects an intermediate outlet of the first reaction vessel to an intermediate inlet of the second reaction vessel;
the hydrolysis bed is located in the first reaction vessel;
the first sorption bed and the second sorption bed are located in the second reaction vessel,
further comprising:
a fuel source conduit fluidly connecting the inlet of the first reaction vessel to a fuel source;
a heating device located on or adjacent to at least one of the first reaction vessel or the fuel source conduit; and
a cooling device located on or adjacent to the intermediate fuel conduit.

7. The fuel desulfurization system of claim 2, wherein the hydrolysis catalyst and the sulfur species sorbent are arranged as a dual action bed located in the at least one reaction vessel.

8. The fuel desulfurization system of claim 1, wherein:
the outlet is fluidly connected to a fuel cell system;
the inlet is fluidly connected to a biogas fuel source; and
the hydrolysis catalyst is configured to hydrolyze the sulfur species in the biogas fuel received from the inlet using water in the biogas fuel.

9. A method comprising:
providing a fuel to least one reaction vessel comprising at least one material to hydrolyze and sequester at least one sulfur species in the fuel; and
outputting a desulfurized fuel from the at least one reaction vessel.

10. The method of claim 9, wherein the at least one material comprises:
a hydrolysis catalyst configured to hydrolyze at least one of carbonyl sulfide or carbon disulfide to generate hydrogen sulfide and carbon dioxide; and
a sulfur species sorbent configured to sequester the at least one sulfur species inside the reaction vessel.

11. The method of claim 10, wherein the sulfur species sorbent comprises:
a first sulfur species sorbent configured to sequester organosulfur species in the fuel; and
a second sulfur species sorbent configured to sequester the hydrogen sulfide in the fuel.

12. The method of claim 11, wherein:
the hydrolysis catalyst comprises Al₂O₃, TiO₂, ZrO₂, CeO₂, SiO₂, or any combination thereof;
the first sulfur species sorbent comprises CuO, Fe₂O₃, MnO₂, ZnO, or any combination thereof, located on a carbon support; and
the second sulfur species sorbent comprises CuO, MnO₂, or any combination thereof,
further comprising:
pressurizing the fuel to increase a temperature of the fuel to 50 °C to 65 °C; and
providing the pressurized fuel to the hydrolysis catalyst to hydrolyze the carbonyl sulfide at the temperature of 50 °C to 65 °C and generate the hydrogen sulfide and the carbon dioxide.

13. The method of claim 11, further comprising:
heating the fuel to increase a temperature of the fuel to 150 °C to 400 °C;
providing the heated fuel to the hydrolysis catalyst to hydrolyze the carbon disulfide at the temperature of 150 °C to 400 °C and generate the hydrogen sulfide and the carbon dioxide;
cooling the fuel output from the hydrolysis catalyst to a temperature below 70 °C; and
providing the cooled fuel to the first sulfur species sorbent,
wherein:
the hydrolysis catalyst is located in a first reaction vessel;
the first sulfur species sorbent and the second sulfur species sorbent are located in a second reaction vessel; and
the fuel is cooled to the temperature below 70 °C between the first and the second reaction vessels.

14. The method claim 10, wherein the hydrolysis catalyst and the sulfur species sorbent are arranged as a dual action bed located in the at least one reaction vessel.

15. The method claim 9, wherein outputting the desulfurized fuel comprises outputting the desulfurized fuel to a fuel cell system, and wherein the fuel comprises a biogas fuel.
